# EUROPÄISCHE PATENTSCHRIFT

(11) **EP 0 380 509 B1**
(45) Veröffentlichungstag und Bekanntmachung des Hinweises auf die Patenterteilung: **10.02.1993**
(21) Anmeldenummer: 88907606.3
(22) Anmeldetag: 07.09.1988
(51) Int. Cl.: H04L 1/24, G06F 11/00, G01R 23/15

(54) **MESSVERFAHREN UND MESSEINRICHTUNG ZUR STÖRUNGSANALYSE DIGITALER ÜBERTRAGUNGSWEGE**
MEASURING PROCESS AND DEVICE FOR THE ANALYSIS OF DISTURBANCES IN DIGITAL BUSES
PROCEDE ET DISPOSITIF DE MESURE POUR L'ANALYSE DE PERTURBATIONS DE BUS DIGITAUX

(30) Priorität: 29.09.1987 DE 3733278
(43) Veröffentlichungstag der Anmeldung: 08.08.1990
(73) Patentinhaber: SIEMENS AKTIENGESELLSCHAFT, 80333 München (DE)
(72) Erfinder: KRAUSE, Klaus, D-1000 Berlin 19 (DE)
(86) Internationale Anmeldenummer: DE8800560
(87) Internationale Veröffentlichungsnummer: WO8903142

(56) Entgegenhaltungen:
- EP-A- 0 195 284
- DE-A- 3 117 927
- GB-A- 1 153 822
- US-A- 3 971 920
- 1974 International Zurich Seminar on Digital Communications, 12.-15. März 1974, Zürich, Schweiz, IEEE (New York, US); E. Russ: "Erfassung von Fehlerstrukturen bei der Übertragung digitaler Signale", Seiten G3 (1) - G3 (3)

## Beschreibung

Mit der Störungsanalyse digitaler Übertragungswege wird der Einfluß von Störungen auf die Übertragungswege erfaßt. Störungen bei der Übertragung binärer Informationen wirken sich in der Weise aus, daß eine gesendete logische "1" als "0" und umgekehrt empfangen wird. Solche Übertragungsfehler werden im Rahmen der Störungsanalyse bei pulscodemodulierten (PCM)-Systemen durch einen Vergleich eines empfangenen seriellen Datenstromes mit dem gesendeten Datenstrom als Referenz-Datenstrom erkannt. Der gesendete Datenstrom besteht dabei im allgemeinen aus scheinbar zufälligen Binärfolgen (Quasizufallsfolgen), die beispielsweise mittels eines rückgekoppelten Schieberegisters an Sende- und Empfangsort erzeugt werden. Kennzeichnet man nun im Vergleich des empfangenen Datenstromes mit dem Referenz-Datenstrom fehlerfrei übertragene Bits mit einer "0" und falsch übertragene Bits mit einer "1", erhält man am Ausgang des Übertragungsweges die "Bitfehlerstruktur". Im Rahmen der Auswertung solcher Bitfehlerstruktur können dann zum einen durch deren einfaches Betrachten Empfindlichkeiten der Übertragungsstrecke gegenüber bestimmten Sendemustern erkannt werden, zum anderen können durch Weiterverarbeitung der Bitfehlerstruktur in mathematischen Algorithmen Aussagen über stochastische und systematische Übertragungsfehler zur Ermittlung deren Ursachen getroffen werden.

Die Erfindung bezieht sich auf ein Meßverfahren zur Störungsanalyse digitaler Übertragungswege mit Hilfe der Erfassung einer am Ausgang des jeweiligen Übertragungsweges erzeugten Bitfehlerstruktur, die im Rahmen der Störungsanalyse einer Auswertung zugeführt wird, mit
- einem vom Fehleraufkommen in der Bitfehlerstruktur abhängigen ersten Meßmodus, in dem
   - die Bitfehlerstruktur in einer Zählereinheit zu Datenblöcken zusammengefaßt wird und
   - die Datenblöcke zur Anpassung an die Zugriffszeiten für die Auswertungseinrichtung gespeichert werden,
sowie mit
- einem vom Fehleraufkommen in der Bitfehlerstruktur abhängigen zweiten Meßmodus, in den
   - vom ersten Meßmodus bei Auslastung der Speicherung der Datenblöcke jeweils bis zu deren Entlastung umgeschaltet wird.

Ein derartiges Meßverfahren ist beispielsweise aus dem Vortrag "Erfassung von Fehlerstrukturen bei der Übertragung digitaler Signale" bekannt, der von Ernst Ruß (Forschungsinstitut der Deutschen Bundespost) anläßlich des "Dritten Internationalen Züricher Seminars für digitale Kommunikation" im Jahre 1974 gehalten wurde (veröffentlicht in "1974 International Zürich Seminar On Digital Communications, 12th - 15th March 1974, Proceedings"). Bei diesem Meßverfahren werden im ersten Meßmodus innerhalb der Zählereinheit mit einem ersten Zähler Fehlerbits und fehlerfreie Bits der erfaßten Bitfehlerstruktur ausgezählt, wobei die Aufteilung in Zählabschnitte in Abhängigkeit vom Wechsel zwischen Fehlerbits und fehlerfreien Bits erfolgt. In einem zur Zählereinheit gehörigen zweiten Zähler wird dabei die Länge der einzelnen Zählabschnitte festgehalten. Die Bitfehlerstruktur wird also zu Datenblöcken zusammengefaßt, die Aussagen über die Anzahl und Lage der übertragenen Fehlerbits und der fehlerfreien Bits enthalten. Sind alle Zählstellen des ersten Zählers belegt, wird die Ausgabe seines Zählerstandes zusammen mit dem Zählerstand des zweiten Zählers an einen Umlaufspeicher veranlaßt. Dieser Umlaufspeicher bewirkt eine Anpassung der Datenübertragungsgeschwindigkeit an die Auswertungsgeschwindigkeit. Ist dieser Umlaufspeicher ausgelastet, wird vom dem ersten Meßmodus auf den zweiten umgeschaltet, in dem jedoch nur noch eine Bitfehlerzählung stattfindet, bis der Umlaufspeicher völlig geleert ist. Innerhalb des zweiten Meßmodus können also nur rein quantitative Aussagen getroffen werden (Bitfehlerrate), die Information über die Lage der einzelnen Fehlerbits in der Bitfehlerstruktur liegt nicht vor. Darüber hinaus ist das bekannte Meßverfahren nur für relativ niedrige Datenübertragungsgeschwindigkeiten geeignet, da die einzelnen Bits immer ausgezählt, seriell in den Umlaufspeicher geschoben und dort fortbewegt werden. Schnellere Übertragungsgeschwindigkeiten übersteigen diese Verarbeitungsgeschwindigkeit.

Das erfindungsgemäße Meßverfahren ist demgegenüber dadurch gekennzeichnet, daß
- im ersten Meßmodus die in der Bitfehlerstruktur auftretenden Fehlerfreiräume als Datenblöcke in mehrere parallel nebeneinander angeordneten Zähler als Zählereinheit eingezählt werden, wobei
   - bei jedem auftretenden Bitfehler von einem Zähler auf den benachbarten Zähler umgeschaltet wird,
und daß
- in den zweiten Meßmodus umgeschaltet wird, wenn sich das Einzählen der Fehlerfreiräume als Datenblöcke in die einzelnen Zähler mit dem Zugriff auf die Datenblöcke seitens der Auswertungseinrichtung überschneidet.

Hierbei wird in vorteilhafter Weise die Meßdatenreduktion durch die Bildung von Datenblöcken im ersten Meßmodus ausschließlich dann vorgenommen, wenn keine Gefahr besteht, daß Informationen verlorengehen könnten. Dies ist aber abhängig vom Fehleraufkommen in der Bitfehlerstruktur. Bei einem geringen Fehleraufkommen wird sehr viel seltener von einem Zähler auf den nächsten umgeschaltet als bei einem hohen (zumal noch unter Beachtung der möglichen hohen Übertragungsgeschwindigkeiten), so daß bei einem geringen Fehleraufkommen die Zähler gleichzeitig die Speicherfunktion übernehmen können. Durch die parallele Anordnung der Zähler zueinander dienen diese nämlich gleichzeitig der Speicherung, da immer in einen von den Zählern eingelesen werden kann, aus dem gerade nicht ausgelesen wird. Dieser behält den Zählerstand dann bis zum Auslesen bei. Bei der Meßdatenreduktion ist es ausreichend, nur die Fehlerfreiräume einzuzählen, die allerdings auch eine Länge null aufweisen können, was bedeutet, daß zwei Fehlerbits in der Bitfehlerstruktur nebeneinander liegen. Erst wenn das Einlesen sich mit dem Auslesen überschneiden würde, d. h. aufgrund hohen Fehleraufkommens gerade in den Zähler eingelesen werden müßte, aus dem gerade ausgelesen wird, wird bei dem erfindungsgemäßen Meßverfahren in den zweiten Meßmodus umgeschaltet. Durch diesen Ablauf erreicht man eine einfache, aber zuverlässige Umschaltbedingung, die garantiert, daß zu keinem Zeitpunkt Informationen verlorengehen.

Eine andere Ausgestaltung des eingangs angegebenen Meßverfahrens sieht erfindungsgemäß vor, daß
- im zweiten Meßmodus die Bitfolgen der Bitfehlerstruktur in Zeitscheiben geteilt werden,
- die jeweils in einer Zeitscheibe liegenden Bits zeitlich parallel in einem Zwischenspeicher zwischengespeichert werden,
- bei Auslastung des Zwischenspeichers alle zwischengespeicherten Bits zeitlich parallel in einen Hauptspeicher übertragen werden, wobei
   - die Bits aus aufeinanderfolgenden Zeitscheiben nebeneinander im Hauptspeicher abgelegt werden,
und daß
- spätestens bei Auslastung des Hauptspeichers die gespeicherten Bits in der zeitlichen seriellen Abfolge des Auftretens der Bitfolgen in der Bitfehlerstruktur der Auswertungseinrichtung zugeführt werden.

Der wesentliche Vorteil dieses erfindungsgemäßen Meßverfahrens ist, daß auch bei sehr hohen Übertragungsgeschwindigkeiten bis beispielsweise 565 Megabit pro Sekunde die Bitfehlerstruktur vollständig erfaßt wird. Die Information über die Lage der Fehlerbits in der Bitfehlerstruktur -zusätzlich zu der über deren Anzahl -wird damit auch bei sehr hohen Übertragungsgeschwindigkeiten durchgehend zur Verfügung gestellt. Innerhalb des zweiten Meßmodus werden bei dem erfindungsgemäßen Meßverfahren die einzelnen Bits der Bitfehlerstruktur nicht mehr zu Datenblöcken zusammengefaßt, sondern direkt, d. h. unverändert, abgespeichert. Voraussetzung dafür ist natürlich, daß die Abspeicherung entsprechend schnell mit in einer entsprechend großen Speicherkapazität erfolgen kann. Demzufolge erfolgt die Abspeicherung nach einer Seriell/Parallel-Umsetzung der übertragenen Bitfolgen der Bitfehlerstruktur mittels eines Zwischen-und eines Hauptspeichers. Diese sind so miteinander verbunden, daß die aus der seriellen Bitfolge parallel abgespeicherten Bits in der zeitlich richtigen Abfolge aus dem Hauptspeicher ausgelesen werden können, wobei das Auslesen nur abhängig ist von der Auswertungsgeschwindigkeit, so daß der Hauptspeicher als Puffer wirkt.

Bei einer weiteren Ausführungsform des erfindungsgemäßen Meßverfahrens können auch beide Meßmodi in einem Meßverfahren kombiniert sein. Hierdurch ergibt sich eine optimale Strukturanpassung bezüglich des Verfahrensablaufs und der Wahl der erforderlichen Bauelemente.

Eine Meßeinrichtung zur Durchführung des Meßverfahrens nach Anspruch 2 oder 3 ist durch die Merkmale des Anspruchs 4 gekennzeichnet.

Die Meßeinrichtung zur Durchführung des erfindungsgemäßen Meßverfahrens kann vorteilhafterweise derart ausgestaltet sein, daß
- der Hauptspeicher eine Speicherkapazität von 1 MByte aufweist und
- aus acht parallel adressierbaren Speicherblöcken mit jeweils gleich großen Speicherkapazitäten und einer Wortlänge von 16 Bit aufgebaut ist, wobei
   - jeder Speicherblock wiederum aus vier Schreib-Lese-Speichern besteht.

Hierbei ist zum einen von Vorteil, daß der Hauptspeicher mit einer Speicherkapazität von 1 Mbyte in der Lage ist, eine umfangreiche Bitfehlerstruktur aufzuzeichnen, die entsprechend zuverlässige Aussagen über das Fehlerverhalten des Übertragungsweges zulassen. Solche aussagekräftige Bitfehlerstruktur wird in der Regel mit Quasizufallsfolgen als Sendesignale erzeugt, die mittels eines 23 Bit langen rückgekoppelten Schieberegisters erzeugt werden. Eine derartige Zufallsfolge wiederholt sich erst nach 2²³ - 1 Bits (ist also 1 Mbyte lang) und entspricht einem "weißen Rauschen". Aufgrund der durch die Seriell/Parallel-Umsetzung erreichten normalen Speichergeschwindigkeit kann der Hauptspeicher mit handelsüblichen Bauelementen (CMOS-RAMS) realisiert werden. Dafür spricht auch, daß nur eine übliche Wortlänge von 16 Bit für die einzelnen Speicherblöcke erforderlich ist.

Entsprechend einer weiteren Ausgestaltung der erfindungsgemäßen Meßeinrichtung erfolgt
- die Aufteilung der seriell auftretenden Bitfolgen der Bitfehlerstruktur mit einem Seriell/Parallel-Demultiplexer mit einer Zeitteilung von 1 : 8, so daß innerhalb jeder Zeitscheibe immer acht Bits der Bitfolgen liegen.

Ein derartiger Seriell/Parallel-Demultiplexer ermöglicht die Aufzeichnung einer Bitfehlerstruktur auch bei sehr hohen Übertragungsgeschwindigkeiten. Es kann sich hierbei ebenfalls um ein handelsübliches Bauelement handeln, das zur Gattung der Höchstgeschwindigkeitsbausteine gehört. Die Funktion dieses Demultiplexers besteht darin, immer acht seriell aufeinanderfolgende Bits zu einem Byte zusammenzufassen und parallel weiterzugeben. Dies wird dadurch bewirkt, daß der Arbeitstakt des Demultiplexers ein Achtel des Übertragungstaktes beträgt. Hierdurch wird eine Herunterteilung des Verarbeitungstaktes bewirkt, der eine Weiterverarbeitung (Abspeichern und Auswerten) der Bits mit den handelsüblichen Speicher- und Rechenbausteinen ermöglicht.

Die vom Seriell/Parallel-Demultiplexer innerhalb einer Zeitscheibe gesammelten acht Bits werden an den Zwischenspeicher weitergegeben. Dieser besteht nach einer anderen Ausgestaltung der erfindungsgemäßen Meßeinrichtung aus acht Schieberegistern mit je einer Wortlänge von 16 Bit. Auch hierbei kann es sich um handelsübliche Bausteine handeln.

Wenn der Zwischenspeicher vorteilhafterweise aus acht 16 Bit-Schieberegistern und der Hauptspeicher aus acht 16-Bit-Speicherblöcken besteht, sind diese entsprechend einer weiteren Ausgestaltung der erfindungsgemäßen Meßeinrichtung über einen Datenbus mit 128 Leitungen parallel so miteinander verbunden, daß die in den Schieberegistern immer in zwei aufeinanderfolgenden Zeitscheiben zwischengespeicherten Bits nebeneinander jeweils in einem Speicherblock abgelegt werden. Das erfindungsgemäße Verfahren kann also unter Zuhilfenahme einer einfachen Hardware-Konzeption mit einer entsprechenden Meßeinrichtung durchgeführt werden. Aufwendige Software-Lösungen sind nicht erforderlich.

Gemäß einer anderen vorteilhaften Ausgestaltung der erfindungsgemäßen Meßeinrichtung ist vorgesehen, daß
- die im ersten Meßmodus aktive Zählereinheit vier Zählerketten als Zähler aufweist, die
   - jeweils einem Zeitbasis-Vorteiler und einem Zeitbasis-Hauptzähler bestehen und die
   - über einen Eingangsmultiplexer beaufschlagt werden.

Vier parallele Zählerketten reichen aus, um Bitfehlerstrukturen mit Übertragungsgeschwindigkeiten bis 565 Megabit pro Sekunde abzuarbeiten. Die Zeitbasis-Vorteiler zählen dabei im Bereich hoher Übertragungsfrequenzen die niederwertigen Bits und speichern diese als Zahl ab. Die Zeitbasis-Hauptzähler zählen die höherwertigen Bits und speichern diese Zahl ebenfalls, bis diese zusammen mit der entsprechenden Zahl von den Zeitbasis-Vorteilern von der Auswertungseinrichtung abgerufen werden.

Die Umschaltung zwischen den Zählerketten über einen Eingangsmultiplexer ermöglicht dabei das gleichzeitige Zählen und Verarbeiten.

Gemäß einer weiteren Ausgestaltung der Meßeinrichtung zur Durchführung des erfindungsgemäßen Verfahrens erfolgt die Umschaltung zwischen den beiden Meßmodi über ein Interrupt-Schaltungsteil. Ein derartiges Schaltungsteil weist ebenfalls eine einfache Hardware-Konzeption auf und bewirkt das stets sichere Umschalten zwischen den zwei Meßmodi. Gleichzeitig wird durch das Auftreten eines Interruptbefehls die Auswertungseinrichtung dazu veranlaßt, an der Unterbrechungsstelle im ersten Meßmodus einen entsprechenden Merker zu setzen und nach Abarbeitung des zweiten Meßmodus automatisch an diese Stelle zurückzukehren. Das ist dann der Fall, wenn die auftretende Fehlerhäufigkeit eine Erfassung der Bitfehlerstruktur mit gleichzeitiger Meßdatenreduktion wieder zuläßt.

Anhand der Figuren wird nachfolgend das erfindungsgemäße Meßverfahren und eine besonders bevorzugte Ausführung einer Meßeinrichtung zur Durchführung des Verfahrens näher erläutert. Es zeigen dabei die
- Figur 1 das erfindungsgemäße Meßverfahren in prinzipieller Darstellung in Form eines Signalflußschemas, die
- Figur 2 eine erfindungsgemäße Meßeinrichtung zur Durchführung des erfindungsgemäßen Verfahren in prinzipieller Darstellung in Form eines Blockschaltbildes, die
- Figur 3 eine Bit- Belegungsmatrix für den Zwischenspeicher und die
- Figur 4 eine Bit-Belegungsmatrix für den Hauptspeicher in Zusammenhang mit der Bitbelegung des Zwischenspeichers gemäß Figur 3.

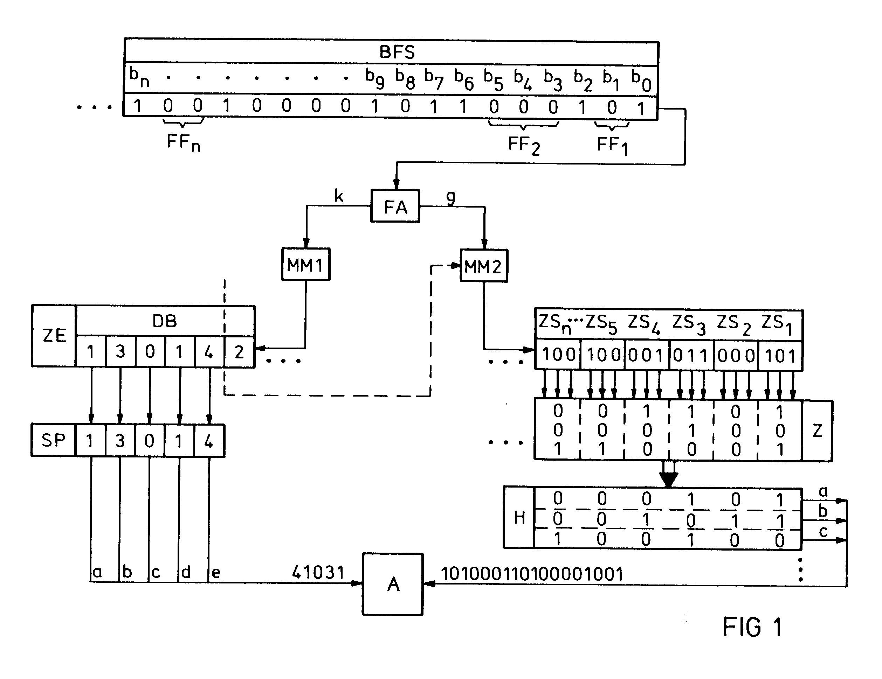

In Fig. 1 ist im oberen Teil eine am Ausgang eines nicht dargestellten, im Hinblick auf Störungen zu analysierenden Übertragungsweges erzeugte Bitfehlerstruktur BFS mit einer Bitfolge b₀ ... bₙ mit den einzelnen Bits b₀, ..., bₙ dargestellt. Die gesamte Bitfehlerstruktur BFS besteht aus den einzelnen Bits b₀, ..., bₛ. Die Bitfolge b₀ ... bₙ weist eine Länge von 2²³ - 1 Bits auf, weil im gewählten Ausführungsbeispiel das Sendesignal von Quasizufallsfolgen gebildet ist. Diese Bitfolge b₀ ... bₙ kann sich unter Bildung der Bitfehlerstruktur BFS beliebig oft wiederholen. Charakterisiert wird die Bitfehlerstruktur BFS durch Fehlerfreiräume FF₁, ..., FFₙ, die gebildet werden von aufeinanderfolgenden fehlerfreien Bits, in der Figur 1 beispielsweise die "0"-Bits b₃, b₄ und b₅, zwischen zwei fehlerhaften "1"-Bits b₂ und b₆. Der Fehlerfreiraum FF₂ weist damit die Länge von 3 Bits auf. In Abhängigkeit von einem durch Anzahl und Länge der Fehlerfreiräume FF₁, ..., FFₙ bestimmten Fehleraufkommen FA innerhalb der Bitfehlerstruktur BFS wird diese nun in einem ersten Meßmodus MM1 oder in einem zweiten Meßmodus MM2 verarbeitet. Die Erkenntnis, ob es sich um ein kleines (k) oder großes (g) Fehleraufkommen FA handelt, wird jedoch immer über den ersten Meßmodus MM1 erhalten.

Im ersten Meßmodus MM1 wird nämlich die Bitfehlerstruktur BFS in einer Zählereinheit ZE zu Datenblöcken DB zusammengefaßt, indem die Fehlerfreiräume FF₁, ..., FFₙ ausgezählt werden. Im dargestellten Ausführungsbeispiel sind die Fehlerfreiräume FF₁, ..., FFₙ, beginnend bei dem Bit b₀, beispielsweise 1, 3, 0, 1, 4 und 2 Bits lang. Die entsprechenden Datenblöcke DB mit den Zahlwerten 1, 3, 0, 1, 4 und 2 werden dann zur Anpassung an die Zugriffsgeschwindigkeit einer Auswertungseinrichtung A in einem Speicher SP zwischengespeichert und - entsprechend der in Fig. 1 angedeuteten Reihenfolge a, b, c ... - in die Auswertungseinrichtung A eingelesen. Ist der Speicher SP ausgelastet - im gewählten Ausführungsbeispiel können nur fünf Datenblöcke DB gespeichert werden, so daß der Datenblock DB mit der Zahl "2" nicht mehr in den Speicher SP übernommen werden kann (was bedeutet, daß das Fehleraufkommen FA für die Verarbeitung im ersten Meßmodus MM1 zu groß geworden ist) -, wird in einen zweiten Meßmodus MM2 umgeschaltet.

In diesem zweiten Meßmodus MM2 wird die erzeugte Bitfehlerstruktur BFS zunächst in einzelne Zeitscheiben ZS₁, ..., ZSₙ aufgeteilt. Die Dauer der einzelnen Zeitscheiben ZS₁, ..., ZSₙ wird dabei durch das aufteilende Bauelement (in Fig. 1 nicht dargestellt) bestimmt. Im gewählten Ausführungsbeispiel beinhaltet beispielsweise jede Zeitscheibe ZS₁, ..., ZSₙ drei Bits b₀, b₁, b₂; b₃, b₄, b₅; ...; bₙ₋₂, bₙ₋₁, bₙ. Nach der Aufteilung werden immer die drei in einer Zeitscheibe ZS₁, ..., ZSₙ gesammelten Bits b₀, b₁, b₂; b₃, b₄ b₅; ...; bₙ₋₁, bₙ₋₂, bₙ parallel in einen Zwischenspeicher Z übergeben. Dieser enthält also eine entsprechende Anzahl parallel ansteuerbarer Adressen. Durch eine derartige Umsetzung von seriell sehr schnell auftretenden Bits b₀, ..., bₙ in parallel zu übergebende Bits b₀, b₁, b₂; b₃, b₄, b₅; ...; bₙ₋₂, bₙ₋₁, bₙ wird eine Reduzierung der nachfolgend erforderlichen Verarbeitungsgeschwindigkeit erreicht. Im vorliegenden Beispiel ist diese nur noch ein Drittel so groß sein wie die Übertragungsgeschwindigkeit der Bits b₀, ..., bₙ der Bitfehlerstruktur BFS. Dadurch wird eine Abspeicherung der Bitfehlerstruktur BFS mit normalen Speicherelementen möglich.

Ist der Zwischenspeicher Z ausgelastet, so gibt er parallel alle gespeicherten Bits b₀, ..., bₙ an einen Hauptspeicher H ab, der ein Mehrfaches der Kapazität des Zwischenspeichers Z aufweist. Der Zwischenspeicher Z ist mit dem Hauptspeicher H dabei so verdrahtet, daß wieder eine Aneinanderreihung der parallel im Zwischenspeicher Z abgespeicherten Bits b₀, b₁, b₂; b₃, b₄, b₅; ...; bₙ₋₂, bₙ₋₁, bₙ in der zeitrichtigen Reihenfolge beim Übertragen in den Hauptspeicher H erfolgt. Das Auslesen aus dem Hauptspeicher H erfolgt entsprechend in der Reihenfolge (in der Figur 1 angedeutet mit a, b und c), daß die Bitfehlerstruktur BFS in ihrer korrekten zeitlichen Abfolge der Auswertungseinrichtung A zugeführt werden kann.

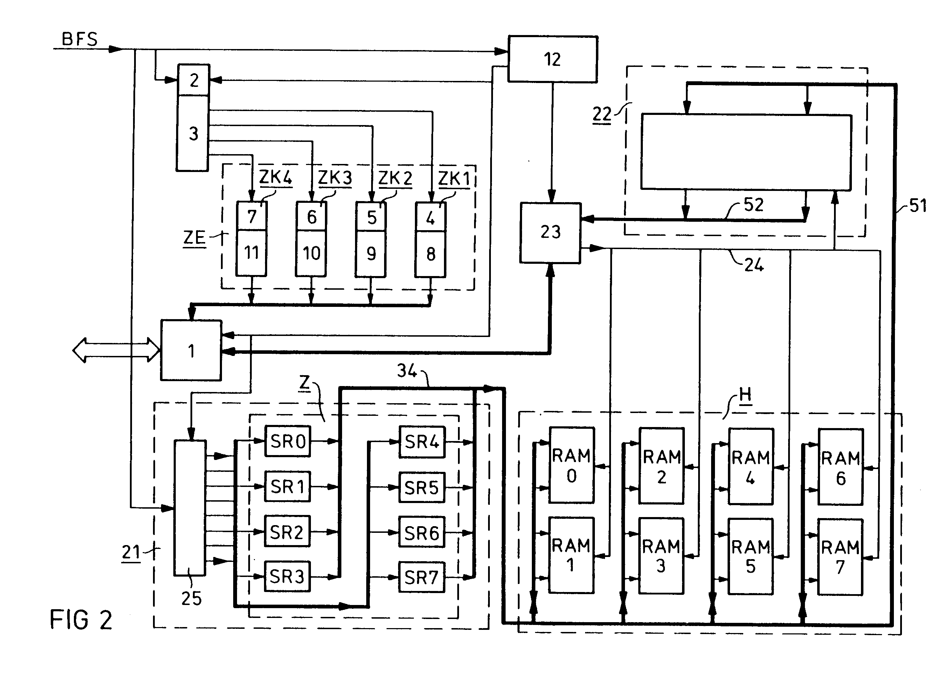

In der Figur 2 ist ein vorteilhaftes Ausführungsbeispiel einer Meßeinrichtung zur Durchführung des erfindungsgemäßen Verfahrens dargestellt. Der Übersichtlichkeit halber sind Steuertaktleitungen gar nicht und Adressleitungen nur soweit erforderlich dargestellt. Das Herzstück dieser Meßeinrichtung ist ein erster Rechner 1, der einen Teil der Auswertungseinrichtung A bildet und von einer übergeordneten, nicht weiter dargestellten Zentraleinheit gesteuert wird, die die Darstellung und Ausgabe der vom ersten Rechner 1 ermittelten Meßwerte übernimmt. Diese Steuerung ist in der Figur 2 durch den großen Doppelpfeil im linken Bildteil dargestellt.

Für die Erfassung langer Fehlerfreiräume FF₁, ..., FFₙ (siehe Fig. 1) arbeitet das erfindungsgemäße Meßverfahren - wie schon erläutert - im ersten Meßmodus MM1 (siehe Fig. 1). Hierzu wird die Bitfehlerstruktur BFS über eine Torschaltung 2 einem Eingangsmultiplexer 3 zugeführt. Mit der Torschaltung 2 werden die einzelnen Bits b₀, ..., bₙ der Bitfehlerstrukturen BFS in der für die jeweilige Meßart notwendigen Verteilung auf den Eingangsmultiplexer 3 durchgeschaltet. Die unterschiedlichen Meßarten können neben der Bitfehlerstrukturaufzeichnung nach dem erfindungsgemäßen Meßverfahren auch beispielsweise die Ermittlung von Fehlerquoten in Form von linearen und exponentiellen Mittelwerten oder die Ermittlung von Fehlerzählungen in Form von Fehlersummen über bestimmte Meßzeiten oder Fehlerzuwachsraten sein.

Dem Eingangsmultiplexer 3 sind vier parallel zueinander angeordnete, die Zählereinheit ZE bildende Zählerketten ZK₁, ..., ZK₄ nachgeschaltet, die jeweils aus einem Zeitbasis-Vorteiler 4, 5, 6 und 7 (beispielsweise: jeweils 2 Hexadezimalzähler Typ 10 H 136, ECL (Emitter coupled logic)-Technik, Firma Motorola, Datenbuch 1982/1983) und einem Zeitbasis-Hauptzähler 8, 9, 10 und 11 (beispielsweise: Typ 82 C 54, Firma Intel, Microcomputer components data book, 1985) aufgebaut sind. Vorteiler und Hauptzähler können auch als kostengünstige "gate-array"-Version ausgeführt sein. Die Zeitbasis-Vorteiler 4, ..., 7 sind für sehr hohe Frequenzen erforderlich, um diese entsprechend herunterzuteilen. Sie geben quasi die niederwertigen Bits bei der Auszählung der Fehlerfreiräume FF₁, ..., FFₙ an, während die Zeitbasis-Hauptzähler 8, ..., 11 die höherwertigen auszählen. Geht man beispielsweise von einer pulscodemodulierten Übertragungsstrecke mit einer Übertragungsfrequenz von 140 Mbit/s und einer angenommenen Verarbeitungszeit des ersten Rechners 1 von 20 µs aus, so können mit vier parallelen Zählerketten ZK₁, ...., ZK₄ Bitfehlerstrukturen BFS verarbeitet werden, bei denen die einzelnen Bitfehler in einem Zeitraum von größer als 80 µs auftreten. Wird nämlich bei jeweils einem auftretenden Bitfehler über den Eingangsmultiplexer 3, der das gleichzeitige Ein- und Auslesen ermöglicht, von beispielsweise der Zählerkette ZK₁ auf die Zählerkette ZK₂ und dann auf die Zählerkette ZK₃ umgeschaltet, so ist dies solange möglich, wie der erste Rechner 1 nicht gerade aus der zuletzt angesteuerten Zählerkette ZK₁, ..., ZK₄ ausliest.

Überschneidet sich das Auslesen mit dem Einlesen, wird erfindungsgemäß in den zweiten Meßmodus MM2 (siehe Fig. 1) umgeschaltet. Eine derartige Überschneidung von Ein- und Auslesen wird von einem Interrupt-Schaltungsteil 12 erfaßt. Dieses veranlaßt mittels eines Hardware-Befehls, daß der erste Rechner 1 das Auslesen aus der jeweiligen Zählerkette ZK₁, ..., ZK₄ unterbricht, wobei der erste Rechner 1 sich an der Unterbrechungsstelle einen Merker setzt, um später an dieser Stelle das Auslesen wieder aufnehmen zu können. Aufgenommen wird der Meßmodus MM1 erst wieder, wenn das Fehleraufkommen FA (siehe Fig. 1) eine Erfassung in Form von Datenblöcken DB mit dem ersten Rechner 1 wieder zuläßt.

Tritt also der Fall ein, daß in schneller Abfolge kurze Fehlerfreiräume FF₁, ..., FFₙ in der Bitfehlerstruktur BFS auftauchen, so wird von dem Meßmodus MM1 in den zweiten Meßmodus MM2 umgeschaltet und in einem anderen Teil der Meßeinrichtung weitergearbeitet. Dieser andere Teil der Meßeinrichtung besteht im wesentlichen aus vier Funktionsblöcken: aus einem Seriell/ Parallel-Umsetzblock 21, dem Hauptspeicher H, einem Leitungstreiberblock 22 und einem zweiten Rechner 23, der den Hauptspeicher H und den Leitungstreiberblock 22 über Adressleitungen 24 steuert und der mit dem ersten Rechner 1 korrespondiert. Auch der zweite Rechner 23 ist Teil der Auswertungseinrichtung A.

Der Seriell/Parallel-Umsetzblock 21 besteht zum einen aus einem Seriell/Parallel-Demultiplexer 25, der eine Wortbreite von acht Bit besitzt, und zum anderen aus dem Zwischenspeicher Z. Dieser Demultiplexer 25 ist beispielsweise ein Hochgeschwindigkeitsbaustein in Gallium-Arsenid-Technik zur Anpassung an sehr hohe Übertragungsraten bis 565 Mbit/s (beispielsweise: 1 : 8 time division demultiplexer/serial to parallel converter 10 G 041, 10 G Pico Logic™ Family, Firma GibaBit Logic, Newbury Park, Preliminary 10 G 041 11/85, p. 1 - 12). Die Funktion des Demultiplexers 25 besteht darin, immer acht aufeinanderfolgende Bits in der Bitfehlerstruktur BFS zu einem Byte zusammenzufassen und parallel weiterzugeben. Der Demultiplexer 25 bildet also Zeitscheiben ZS₁, ..., ZSₙ, in denen jeweils acht einzelne Bits liegen. Bei einem PCM-System mit 565 Mbit/s Übertragungsgeschwindigkeit erfolgt also nur noch alle 14 ns ein Weitergabevorgang. Die Weitergabe der zu einem Byte zusammengefaßten acht einzelnen Bits erfolgt parallel an den Zwischenspeicher Z, der aus acht Schieberegistern SR0, ..., SR7 besteht. Diese Schieberegister SR0, ..., SR7 sind aufgrund der verminderten Verarbeitungsgeschwindigkeit handelsübliche Bausteine und haben eine Wortlänge von sechzehn Bit, so daß insgesamt sechzehn Bytes in den Schieberegistern SR0, ..., SR7 zwischengespeichert werden können (beispielsweise: Schieberegister 74 F 675, Fast-TTL-Baustein, Datenbuch "Fast Fairchild Advanced Schottky - TTL", Kap. 4, S. 525 ff., 1985).

Da eine Weitergabe der Daten vom Seriell/Parallel-Demultiplexer 25 an die Schieberegister SR0, ..., SR7 alle 14 ns und dies insgesamt sechzehnmal erfolgt, sind die Schieberegister SR0, ..., SR7 nach 224 ns ausgelastet, so daß deren Inhalt an den Hauptspeicher H übergeben werden muß. Bei einem derartigen Schreibzyklus von über 200 ns Länge kann dieser Hauptspeicher H aus handelsüblichen Schreib-Lese-Speichern aufgebaut sein (beispielsweise: Highspeed static CMOS-RAM HM 62256 P - 10, Firma Hitachi, Datenbuch "IC-Momory Data Book", 1985). Da die Daten aus den Schieberegistern SR0, ..., SR7 parallel in den Hauptspeicher H übertragen werden, verbindet beide ein Datenbus 34 mit insgesamt 128 Leitungen. Die Veranlassung der Datenübertragung erfolgt dabei mittels nicht weiter dargestellter Leitungstreiber.

Der Hauptspeicher H hat eine Größe von 1 Mbyte. Er ist zusammengesetzt aus acht Speicherblöcken RAM 0, ..., RAM 7, von denen jeder eine Wortbreite von sechzehn Bits aufweist und eine Speichertiefe von 64 k. Insgesamt ergibt sich also die Speicherkapazität von 2²³ = 1 Mbyte. Jeder einzelne Speicherblock RAM 0, ..., RAM 7 besteht aus vier nicht weiter dargestellten handelsüblichen CMOS-Schreib-Lese-Speichern mit je einer Speicherkapazität von 32 kbyte (Typ s. o.). Da jeder Speicherblock RAM 0, ..., RAM 7 eine Speichertiefe von 64 k aufweist, kann insgesamt 65 536 mal der Inhalt des Zwischenspeichers Z an den Hauptspeicher H übergeben werden. Erst dann ist der Hauptspeicher H mit seiner Speicherkapazität von 1 Mbyte ausgelastet.

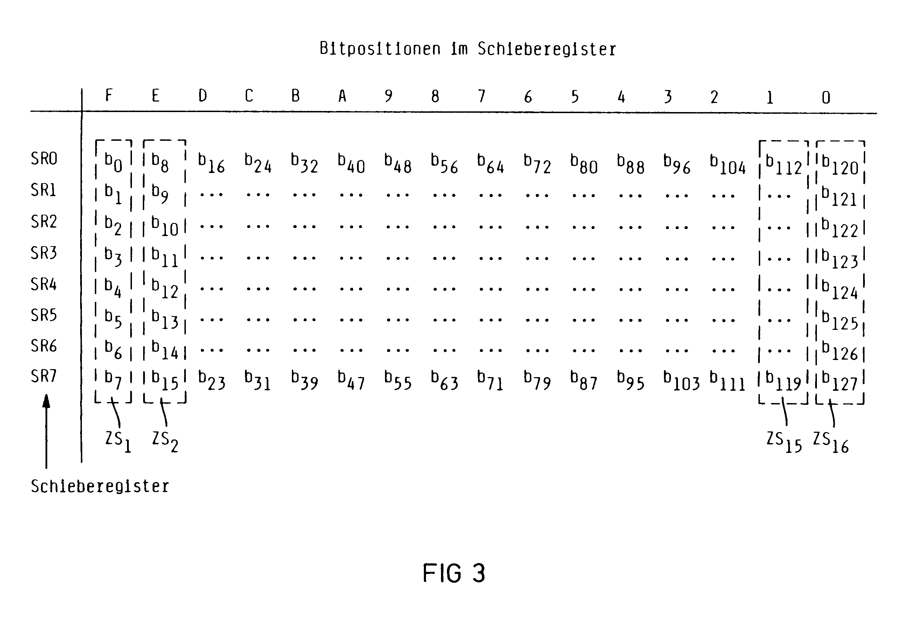

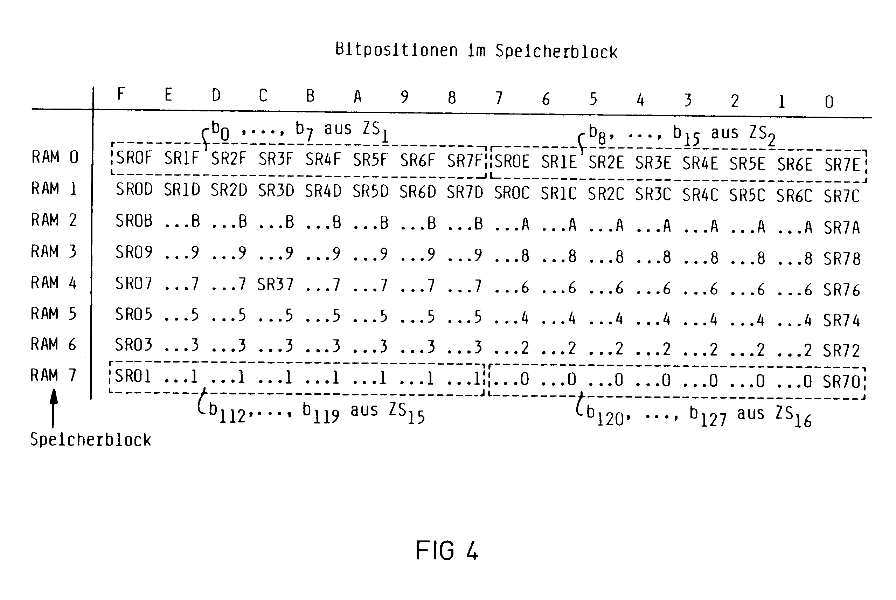

Die Verdrahtung der Schieberegister SR0, ..., SR7 mit den Speicherblöcken RAM 0, ..., RAM 7 des Hauptspeichers H erfolgt so, daß immer die Bits zweier aufeinanderfolgender Zeitscheiben ZS₁, ..., ZSₙ hintereinander in einen Speicherblock RAM 0, ..., RAM 7 abgelegt werden. Weitere Bemerkungen hierzu siehe in den Erläuterungen zu den Figuren 3 und 4. Durch diese Verdrahtung wird erreicht, daß beim Auslesen der Daten aus dem Hauptspeicher in den zweiten Rechner 23 über den nicht weiter ausgeführt dargestellten Leitungstreiberblock 22 und einen weiteren Datenbus 51 bzw. 52 die einzelnen Bits in der Reihenfolge ihres zeitlichen Auftretens in der Bitfehlerstruktur BFS verarbeitet werden. Es wird also eine chronologisch richtige Verarbeitung der einzelnen Bits b₀, ..., bₙ der Bitfehlerstruktur BFS trotz hoher Übertragungsgeschwindigkeiten bis 565 Mbit/s möglich, ohne daß die Information über die Lage der einzelnen Fehler in der Bitfehlerstruktur BFS verlorengeht.

Der zweite Rechner 23 ist in seinem Aufbau in der Figur 2 nicht weiter ausgeführt dargestellt. So kann der Start für die Auswertung der Bitfehlerstruktur BFS durch ein externes Triggersignal beliebig im Speicherbereich des Hauptspeichers H verschoben werden. Es läßt sich dementsprechend eine beliebige Anfangsadresse laden. Ist weiterhin die Übertragung der Daten aus dem Zwischenspeicher Z in den Hauptspeicher H abgeschlossen, liest der zweite Rechner 23 die Daten über eine nicht dargestellte Schreiblogik ein. Diese kann aus einem Signalgeber, einem Schreibsignalgeber und einem Adresszähler bestehen. Nach dem Einlesen der Daten kann der zweite Rechner 23 eine Datenreduktion in Form von Abzählen der Fehlerfreiräume FF₁, ..., FFₙdurchführen.

In Fig. 3 ist die Verteilung der einzelnen Bits b₀ ... b₁₂₈ einer Bitfolge b₀ ... bₙ in den einzelnen Bitpositionen 0 bis F (16 bit Wortbreite) der Schieberegister SR0, ..., SR7 als Matrix dargestellt. Waagerecht sind die Bitpositionen 0 bis F aufgetragen und senkrecht die einzelnen Schieberegister SR0 bis SR7. Da jedes einzelne Schieberegister SR0, ..., SR7 in der Lage ist, Worte mit 16 Bit Breite aufzunehmen, können insgesamt in den acht Schieberegistern SR0,..., SR7 128 Bits gleichzeitig abgelegt werden. Die Verteilung der einzelnen Bits erfolgt dabei in der Weise, daß die jeweils in den Zeitscheiben ZS₁, ZS₂ ... ZS₁₅, ZS₁₆ liegenden acht Bits b₀ ... b₇; b₈ ... b₁₅; ...; b₁₁₁ ... b₁₁₉; b₁₂₀ ... b₁₂₇, parallel in die Schieberegister SR0, ..., SR7 geladen werden. Bei Einschieben der letzten Zeitscheibe ZS₁₆ befinden sich dann die ersten acht Bits b₀, ..., b₇ an der Bitposition F in den Schieberegistern SR0, ..., SR7 und die Bits b₁₂₀, ..., b₁₂₇ der letzten Zeitscheibe ZS₁₆ an der Bitposition 0 in den Schieberegistern SR0 ... SR7.

Die Figur 4 zeigt schematisch die Verdrahtung der Schieberegister SR0, ..., SR7 mit den einzelnen Speicherblöcken RAM 0, ..., RAM 7 des Hauptspeichers H in einer Matrix. Waagerecht sind die Bitpositionen 0 bis F der Speicherblöcke RAM 0, ..., RAM 7 aufgetragen, senkrecht die Speicherblöcke RAM 0, ..., RAM 7. Die Zuordnung der einzelnen Bitpositionen 0 bis F der Schieberegister SR0, ..., SR7 zu den Bitpositionen 0 bis F der Speicherblöcke RAM 0, ..., RAM 7, d. h. die Verdrahtung erfolgt nun in der Weise, daß immer die Bits b₀ ... b₇; b₈ ... b₁₅; ...; b₁₁₂ ... b₁₁₉; b₁₂₀ ... b₁₂₇ zweier nebeneinanderliegender Zeitscheiben ZS₁, ZS₂; ...; ZS₁₅, ZS₁₆ in einem Speicherblock RAM 0 bzw. RAM 7 nebeneinander angeordnet werden. Die Indizierung für die Belegung der Speicherblöcke RAM 0 ... RAM 7 mit dem Inhalt der Schieberegister SR0, ..., SR7 ist dabei so gewählt, daß an die Bezeichnung des Schieberegisters SR0, ..., SR7 die die Bitposition 0 ... F angehängt wurde. Im RAM 4 ist beispielsweise an der Bitposition C das Bit b₆₇ aus dem Schieberegister SR3 von der Bitposition 7 (SR37) abgelegt.

Überträgt man jetzt die Bits b₀, ..., b₁₂₇ der einzelnen Schieberegister SR0, ..., SR7, so erkennt man, daß im RAM 0 die Bits b₀, ..., b₁₅ abgelegt sind, im RAM 1 die Bits b₁₆, ..., b₃₁ usw., bis schließlich im RAM 7 die Bits b₁₁₂, ..., b₁₂₇, nebeneinander abgelegt sind. Jeder Speicherblock RAM 0 bis RAM 7 ist somit mit einem ersten Wort, bestehend aus sechzehn Bits, geladen. Entsprechend den weiter oben ausgeführten Erläuterungen wird im Anschluß daran in der gleichen Weise jeder Speicherblock RAM 0, ...,RAM 7 mit einem zweiten Wort in einer Wortlänge von 16 Bit aus den Schieberegistern SR0, ..., SR7 geladen, so daß die Bits b₁₂₈, ..., b₂₅₅ abgespeichert werden können. Dies kann fortgeführt werden, bis 65 536 Worte entsprechend 64 k in jedem Speicherblock RAM 0, ..., RAM 7 abgelegt worden sind, so daß die Kapazität von 1Mbyte des Hauptspeichers H ausgelastet ist.

## Patentansprüche

1. Meßverfahren zur Störungsanalyse digitaler Übertragungswege mit Hilfe der Erfassung einer am Ausgang des jeweiligen Übertragungsweges erzeugten Bitfehlerstruktur (BFS), die im Rahmen der Störungsanalyse einer Auswertungseinrichtung (A) zugeführt wird, mit
- einem vom Fehleraufkommen (FA) in der Bitfehlerstruktur (BFS) abhängigen ersten Meßmodus (MM1), in dem
- die Bitfehlerstruktur (BFS) in einer Zählereinheit (ZE) zu Datenblöcken (DB) zusammengefaßt wird und
- die Datenblöcke (DB) zur Anpassung an die Zugriffszeiten der Auswertungseinrichtung (A) gespeichert werden,
sowie mit
- einem vom Fehleraufkommen (FA) in der Bitfehlerstruktur (BFS) abhängigen zweiten Meßmodus (MM2), in den
- vom ersten Meßmodus (MM1) bei Auslastung der Speicherung (SP) der Datenblöcke (DB) jeweils bis zu deren Entlastung umgeschaltet wird,
**dadurch gekennzeichnet,** daß
- im ersten Meßmodus (MM1) die in der Bitfehlerstruktur (BFS) auftretenden Fehlerfreiräume (FF₁, ..., FFₙ) als Datenblöcke (DB) in mehrere parallel nebeneinander angeordnete Zähler als Zählereinheit (ZE) eingezählt werden, wobei
- bei jedem auftretenden Bitfehler von einem Zähler auf den benachbarten Zähler umgeschaltet wird,
und daß
- in den zweiten Meßmodus (MM2) umgeschaltet wird, wenn sich das Einzählen der Fehlerfreiräume (FF₁, ..., FFₙ) als Datenblöcke (DB) in die einzelnen Zähler zeitlich mit dem Zugriff auf die Datenblöcke (DB) seitens der Auswertungseinrichtung (A) überschneidet. (FIG 1)

2. Meßverfahren zur Störungsanalyse digitaler Übertragungswege mit Hilfe der Erfassung einer am Ausgang des jeweiligen Übertragungsweges erzeugten Bitfehlerstruktur (BFS), die im Rahmen der Störungsanalyse einer Auswertungseinrichtung (A) zugeführt wird, mit
- einem vom Fehleraufkommen (FA) in der Bitfehlerstruktur (BFS) abhängigen ersten Meßmodus (MM1), in dem
- die Bitfehlerstruktur (BFS) in einer Zählereinheit (ZE) zu Datenblöcken (DB) zusammengefaßt wird und
- die Datenblöcke (DB) zur Anpassung an die Zugriffszeiten der Auswertungseinrichtung (A) gespeichert werden,
sowie mit
- einem vom Fehleraufkommen (FA) in der Bitfehlerstruktur (BFS) abhängigen zweiten Meßmodus (MM2), in den
- vom ersten Meßmodus (MM1) bei Auslastung der Speicherung (SP) der Datenblöcke (DB) jeweils bis zu deren Entlastung umgeschaltet wird,
**dadurch gekennzeichnet,** daß
- im zweiten Meßmodus (MM2) die Bitfolgen (b₀ ... bₙ) der Bitfehlerstruktur (BFS) in Zeitscheiben (ZS₁, ..., ZSₙ) geteilt werden,
- die jeweils in einer Zeitscheibe (ZS₁, ..., ZSₙ) liegenden Bits (b₀, b₁, b₂; ...; bₙ₋₂, bₙ₋₁, bₙ) zeitlich parallel in einem Zwischenspeicher (Z) zwischengespeichert werden,
- bei Auslastung des Zwischenspeichers (Z) alle zwischengespeicherten Bits (b₀, ..., bₙ) zeitlich parallel in einen Hauptspeicher (H) übertragen werden, wobei
- die Bits (b₀, b₁, b₂; ...; bₙ₋₂, bₙ₋₁, bₙ) aus aufeinanderfolgenden Zeitscheiben (ZS₁, ..., ZSₙ) nebeneinander im Hauptspeicher (H) abgelegt werden,
und daß
- spätestens bei Auslastung des Hauptspeichers (H) die in ihm gespeicherten Bits (b₀, ..., bₛ) in der zeitlich seriellen Abfolge des Auftretens der Bitfolgen (b₀ ... bₙ) in der Bitfehlerstruktur (BFS) der Auswertungseinrichtung (A) zugeführt werden. (FIG 1)

3. Meßverfahren nach Anspruch 2, **dadurch gekennzeichnet,** daß
- im ersten Meßmodus (MM1) die in der Bitfehlerstruktur (BFS) auftretenden Fehlerfreiräume (FF₁, ..., FFₙ) als Datenblöcke (DB) in mehrere parallel nebeneinander angeordnete Zähler als Zählereinheit (ZE) eingezählt werden, wobei
- bei jedem auftretenden Bitfehler von einem Zähler auf den benachbarten Zähler umgeschaltet wird,
und daß
- in den zweiten Meßmodus (MM2) umgeschaltet wird, wenn sich das Einzählen der Fehlerfreiräume (FF₁, ..., FFₙ) als Datenblöcke (DB) in die einzelnen Zähler zeitlich mit dem Zugriff auf die Datenblöcke (DB) seitens der Auswerteeinrichtung (A) überschneidet. (FIG 1)

4. Meßeinrichtung zur Durchführung des Meßverfahrens nach Anspruch 2 oder 3, **dadurch gekennzeichnet,** daß
- sie eingangsseitig von einem mit der Bitfehlerstruktur beaufschlagbaren Eingangsmultiplexer (3) mit nachgeordneter Zählereinheit (ZE) auf einen mit der Bitfehlerstruktur beaufschlagbaren Seriell/Parallel-Demultiplexer (25) mit nachgeordnetem Zwischenspeicher (Z) umschaltbar ist,
- dem Zwischenspeicher (Z) ein Hauptspeicher (H) nachgeordnet ist,
- der Hauptspeicher (H) über einen Leitungstreiberblock (22) mit einem Teil (Rechner 23) der Auswertungseinrichtung (A) verbunden ist und
- der eine Teil (Rechner 23) der Auswertungseinrichtung (A) mit einem Interrupt-Schaltungsteil verbunden ist, der beim eingangsseitigen Umschalten der Meßeinrichtung den einen Teil (Rechner 23) der Auswertungseinrichtung aktiviert und einen weiteren Teil (Rechner 1) der Auswertungseinrichtung (A) deaktiviert.

5. Meßeinrichtung nach Anspruch 4,
**dadurch gekennzeichnet,** daß
der Hauptspeicher (H) eine Speicherkapazität von 1 MByte aufweist und aus acht parallel adressierbaren Speicherblöcken (RAM 0, ..., RAM 7) mit jeweils gleich großen Speicherkapazitäten und einer Wortlänge von 16 bit aufgebaut ist, wobei
- jeder Speicherblock (RAM 0, ..., RAM 7) wiederum aus vier Schreib-Lese-Speichern besteht.

6. Meßeinrichtung nach Anspruch 4 oder 5,
**dadurch gekennzeichnet,** daß
- der Seriell/Parallel-Demultiplexer (25) eine Zeitteilung von 1 : 8 vornimmt, so daß innerhalb jeder Zeitscheibe (ZS₁, ..., ZSₙ) immer acht Bits (b₀, ..., b₈; b₉...b₁₆; ..., bₙ₋₇ ... bₙ) der Bitfolgen (b₀ ... bₙ) liegen (FIG 3).

7. Meßeinrichtung nach Anspruch 6,
**dadurch gekennzeichnet,** daß
- der Zwischenspeicher (Z) aus acht Schieberegistern (SR0, ..., SR7) mit je einer Wortlänge von 16 bit besteht (FIG 2, 3).

8. Meßeinrichtung nach Anspruch 7,
**dadurch gekennzeichnet,** daß
- die acht Schieberegister (SR0, ..., SR7) des Zwischenspeichers (Z) mit den acht Speicherblöcken (RAM 0, ..., RAM 7) des Hauptspeichers (H) über einen Datenbus (34) mit 128 parallelen Leitungen so verbunden sind, daß die in den Schieberegistern (SR0, ..., SR7) immer in zwei aufeinanderfolgenden Zeitscheiben (ZS₁, ZS₂; ...; ZS₁₅, ZS₁₆) zwischengespeicherten Bits (b₀ ... b₇, b₈... b₁₆; ...; b₁₁₂ ... b₁₁₉, b_{120 ...} b₁₂₇) nebeneinander jeweils in einem Datenblock (RAM 0; RAM 7) abgelegt werden (FIG 2, 3, 4).

9. Meßeinrichtung nach einem der Ansprüche 4 bis 8
**dadurch gekennzeichnet,** daß
- die im ersten Meßmodus (MM1) wirksame Zählereinheit (ZE) vier Zählerketten (ZK₁, ..., ZK₄) als Zähler aufweist, die
- jeweils aus einem Zeitbasis-Vorteiler (4, ..., 7) und einem Zeitbasis-Hauptzähler (8, ..., 11) bestehen und die
- über den Eingangsmultiplexer (3) beaufschlagt werden (FIG 2).

## Claims

1. Measuring method for disturbance analysis of digital transmission paths with the aid of the detection of a bit error structure (BFS) which is generated at the output of the respective transmission path and which is supplied within the framework of the disturbance analysis to an evaluation device (A), having
- a first measuring mode (MM1) which is dependent upon the error arisings (FA) in the bit error structure (BFS) and in which
- the bit error structure (BFS) is combined in a counter unit (ZE) to form data blocks (DB) and
- the data blocks (DB) are stored for adaptation to the access times of the evaluation device (A),
and also having
- a second measuring mode (MM2) which is dependent upon the error arisings (FA) in the bit error structure (BFS) and into which mode
- there is a change-over from the first measuring mode (MM1) in the case of capacity utilization of the storage (SP) of the data blocks (DB) in each case until the unloading thereof,
characterised in that
- in the first measuring mode (MM1) the error free spaces (FF₁, ..., FFₙ) which occur in the bit error structure (BFS) are counted as data blocks (DB) into several counters which are arranged in parallel side by side as the counter unit (ZE), in which case
- with each bit error which occurs there is a change-over from one counter to the adjacent counter
and in that
- there is a change-over into the second measuring mode (MM2) when the counting of the error free spaces (FF₁, ..., FFₙ) as data blocks (DB) into the individual counters temporally overlaps with the access to the data blocks (DB) on the part of the evaluation device (A). (Figure 1)

2. Measuring method for disturbance analysis of digital transmission paths with the aid of the detection of a bit error structure (BFS) which is generated at the output of the respective transmission path and which is supplied within the framework of the disturbance analysis to an evaluation device (A), having
- a first measuring mode (MM1) which is dependent upon the error arisings (FA) in the bit error structure (BFS) and in which
- the bit error structure (BFS) is combined in a counter unit (ZE) to form data blocks (DB) and
- the data blocks (DB) are stored for adaptation to the access times of the evaluation device (A),
and also having
- a second measuring mode (MM2) which is dependent upon the error arisings (FA) in the bit error structure (BFS) and into which mode
- there is a change-over from the first measuring mode (MM1) in the case of capacity utilization of the storage (SP) of the data blocks (DB) in each case until the unloading thereof,
characterised in that
- in the second measuring mode (MM2) the bit sequences (b₀ ... bₙ) of the bit error structure (BFS) are divided into time slices (ZS₁, ..., ZSₙ),
- the bits (b₀, b₁, b₂; ...; bₙ₋₂, bₙ₋₁, bₙ) lying in a respective time slice (ZS₁ ..., ZSₙ) are buffered temporally in parallel in a buffer storage (Z),
- in the case of capacity utilization of the buffer storage (Z) all the bits (b₀, ..., bₙ) which have been buffered are transferred temporally in parallel into a main storage (H), in which case
- the bits (b₀, b₁, b₂; ...; bₙ₋₂, bₙ₋₁, bₙ) from successive time slices (ZS₁, ..., ZSₙ) are stored side by side in the main storage (H),
and in that
- no later than capacity utilization of the main store (H) the bits (b₀, ..., bₛ) stored therein are supplied to the evaluation device (A) in the temporally serial sequence of the occurrence of the bit sequences (b₀ ...bₙ) in the bit error structure (BFS). (Figure 1)

3. Measuring method according to claim 2, characterised in that
- in the first measuring mode (MM1) the error free spaces (FF₁, ..., FFₙ) which occur in the bit error structure (BFS) are counted as data blocks (DB) into several counters which are arranged in parallel side by side as the counter unit (ZE), in which case
- with each bit error which occurs there is a change-over from one counter to the adjacent counter
and in that
- there is a change-over into the second measuring mode (MM2) when the counting of the error free spaces (FF₁, ..., FFₙ) as data blocks (DB) into the individual counters temporally overlaps with the access to the data blocks (DB) on the part of the evaluation device (A). (Figure 1)

4. Measuring device for carrying out the measuring method according to claim 2 or 3, characterised in that
- it can be switched over on the input side from an input multiplexer (3) to which the bit error structure can be applied, with subsequently arranged counter unit (ZE), to a serial/parallel demultiplexer (25) to which the bit error structure can be applied, with subsequently arranged buffer storage (Z),
- a main storage (H) is arranged after the buffer storage (Z),
- the main storage (H) is connected to a portion (computer 23) of the evaluation device (A) by way of a line driver block (22) and
- the one portion (computer 23) of the evaluation device (A) is connected to an interrupt circuit portion which in the case of the change-over of the measuring device on the input side activates one portion (computer 23) of the evaluation device and deactivates a further portion (computer 1) of the evaluation device (A).

5. Measuring device according to claim 4, characterised in that
- the main storage (H) has a storage capacity of 1 mbyte and is built up out of eight storage blocks which can be addressed in parallel (RAM 0, ..., RAM 7) with in each case storage capacities of equal size and a word length of 16 bit, in which case
- each storage block (RAM 0, ..., RAM 7) in turn consists of four read-write memories.

6. Measuring device according to claim 4 or 5, characterised in that
- the serial/parallel demultiplexer (25) undertakes a time division of 1 : 8 so that eight bits (b₀, ..., b₈; b₉...b₁₆; ..., bₙ₋₇ ...bₙ) of the bit sequences (b₀ ... bₙ) always lie within each time slice (ZS₁, ..., ZSₙ) (Figure 3).

7. Measuring device according to claim 6, characterised in that
- the buffer storage (Z) consists of eight shift registers (SR0, ..., SR7) with a respective word length of 16 bit (Figures 2, 3).

8. Measuring device according to claim 7, characterised in that
- the eight shift registers (SR0, ..., SR7) of the buffer storage (Z) are connected with the eight storage blocks (RAM 0, ..., RAM 7) of the main storage (H) by way of a data bus (34) with 128 parallel lines so that the bits (b₀ ... b₇, b₈ ... b₁₆; ...; b_{112 ...} b₁₁₉, b_{120...} b 127) buffered in the shift registers (SR0, ..., SR7) always in two successive time slices (ZS₁, ZS₂; ...; ZS₁₅, ZS₁₆) are stored side by side in each case in a data block (RAM 0; RAM 7) (Figures 2, 3, 4).

9. Measuring device according to one of the claims 4 to 8, characterised in that
- the counter unit (ZE) which is effective in the first measuring mode (MM1) has four counter chains (ZK₁, ..., ZK₄) as counters which
- in each case consist of a time base prescaler (4, ..., 7) and a time base main counter (8, ..., 11) and upon which
- there is action by way of the input multiplexer (3) (Figure 2).

## Revendications

1. Procédé de mesure pour l'analyse de défauts de voies de transmission numérique au moyen de la détection d'une structure d'erreurs sur les bits (BFS), produite à la sortie de la voie de transmission respective et qui est envoyée, dans le cadre de l'analyse de défauts, à un dispositif d'évaluation (A), avec
- un premier mode de mesure (MM1), qui dépend de l'apparition d'erreurs (FA) dans la structure d'erreurs sur les bits (BFS) et dans lequel
- la structure d'erreurs sur les bits (BFS) est réunie, dans une unité de comptage (ZE), sous la forme de blocs de données (DB), et
- les blocs de données (DB) sont mémorisés pour réaliser l'adaptation aux temps d'accès du dispositif d'évaluation (A),
ainsi qu'avec
- un second mode de mesure (MM2), qui dépend de l'arrivée d'erreurs (FA) dans la structure d'erreurs sur les bits (BFS), et sur lequel
- une commutation est exécutée à partir du premier mode de mesure (MM1), lors de l'exécution de la mémorisation (SP) des blocs de données (DB), respectivement jusqu'au déchargement de ces blocs,
caractérisé par le fait que
- dans le premier mode de mesure (MM1), les espaces sans erreurs (FF₁, ..., FFₙ), qui apparaissent dans la structure d'erreurs sur les bits (BFS), sont comptés en tant que blocs de données (DB) dans plusieurs compteurs disposés côte-à-côte en parallèle et utilisés comme unité de comptage (ZE),
- une commutation étant exécutée d'un compteur au compteur voisin lors de l'apparition de chaque erreur sur les bits,
et que
- une commutation est faite sur le second mode de mesure (MM2) lorsque le comptage des espaces sans erreurs (FF₁, ..., FFₙ) en tant que blocs de données (DB) dans les différents compteurs et l'accès aux blocs de données (DB) à partir du dispositif d'évaluation (A) se chevauchent dans le temps. (Figure 1).

2. Procédé de mesure pour l'analyse de défauts dans des voies de transmission numérique au moyen de la détection d'une structure d'erreurs sur les bits (DFS), produite à la sortie de la voie de transmission respective et qui est envoyée, dans le cadre de l'analyse de défauts, à un dispositif d'évaluation (A), avec
- un premier mode de mesure (MM1), qui dépend de l'apparition d'erreurs (FA) dans la structure d'erreurs sur les bits (BFS) et dans lequel
- la structure d'erreurs sur les bits (BFS) est réunie, dans une unité de comptage (ZE), sous la forme de blocs de données (DB), et
- les blocs de données (DB) sont mémorisés pour réaliser l'adaptation aux temps d'accès du dispositif d'évaluation (A),
ainsi qu'avec
- un second mode de mesure (MM2), qui dépend de l'arrivée d'erreurs (FA) dans la structure d'erreurs sur les bits (BFS), et sur lequel
- une commutation est exécutée à partir du premier mode de mesure (MM1), lors de l'exécution de la mémorisation (SP) des blocs de données (DB), respectivement jusqu'au déchargement de ces blocs,
caractérisé par le fait que
- dans le second mode de mesure (MM2), les séquences binaires (b₀ ... bₙ) de la structure d'erreurs sur les bits (BFS) sont réparties dans des tranches de temps (ZS₁, ..., ZSₙ),
- les bits (b₀, b₁, b₂; ...; bₙ₋₂, bₙ₋₁, bₙ) situés respectivement dans une tranche de temps (ZS₁... ZSₙ) sont mémorisés temporairement en parallèle dans le temps dans une mémoire intermédiaire (Z),
- lors de l'utilisation de la mémoire intermédiaire (Z) tous les bits (b₀,...bₙ) sont transmis en parallèle dans le temps dans une mémoire principale (H),
- les bits (b₀,b₁,b₂; ...; bₙ₋₂, bₙ₋₁, bₙ) à partir de tranches de temps successives (ZS₁, ..., ZSₙ) sont mémorisés côte-à-côte dans la mémoire principale (H),
et que
- au plus tard lors de l'utilisation de la mémoire principale (H), les bits (b₀, ..., bₛ) mémorisés dans cette mémoire sont envoyés au dispositif d'évaluation (A), selon la succession en série dans le temps de l'apparition des séquences binaires (b₀ ... bₙ) dans la structure d'erreurs sur les bits (BFS). (Figure 1).

3. Procédé de mesure suivant la revendication 2, caractérisé par le fait que
- dans le premier mode de mesure (MM1), les espaces sans erreurs (FF₁, ..., FFₙ), qui apparaissent dans la structure d'erreurs sur les bits (BFS), sont comptés en tant que blocs de données (DB) dans plusieurs compteurs disposés côte-à-côte en parallèle et utilisés comme unité de comptage (ZE),
- une commutation étant exécutée d'un compteur au compteur voisin lors de l'apparition de chaque erreur sur les bits,
et que
- une commutation est faite sur le second mode de mesure (MM2) lorsque le comptage des espaces sans erreurs (FF₁, ..., FFₙ) en tant que blocs de données (DB) dans les différents compteurs avec l'accès aux blocs de données (DB) à partir du dispositif d'évaluation (A) se chevauchent dans le temps. (Figure 1).

4. Dispositif de mesure pour la mise en oeuvre du procédé suivant la revendication 2 ou 3, caractérisé par le fait que
- côté sortie, il peut être commuté d'un multiplexeur d'entrée (3), qui peut être chargé par la structure d'erreurs sur les bits et en aval duquel est branchée une unité de comptage (ZE), sur un démultiplexeur série/parallèle (25), qui peut être chargé par la structure d'erreurs sur les bits et en aval duquel est branché une mémoire intermédiaire (Z),
- une mémoire principale (H) est branchée en aval de la mémoire intermédiaire (Z),
- la mémoire principale (H) est raccordée par l'intermédiaire d'un bloc d'attaque de lignes (22), à une partie (calculateur 23) du dispositif d'évaluation (A), et
- la première partie (calculateur (23) du dispositif d'évaluation (A) est raccordée à un élément de circuit d'interruption qui, lors de la commutation du dispositif de mesure côté entrée, active la première partie (calculateur 23) du dispositif d'évaluation et désactive une autre partie (calculateur 1) du dispositif d'évaluation (A).

5. Dispositif de mesure suivant la revendication 4, caractérisé par le fait que la mémoire principale (H) possède une capacité de mémoire de 1 M.octet, et est constituée par huit blocs de mémoire (RAM 0, ..., RAM 7) pouvant être adressés en parallèle et possédant des capacités de mémoire respectivement identiques et une longueur de mot de 16 bits,
- chaque bloc de mémoire (RAM 0, ..., RAM 7) étant à nouveau constitué par quatre mémoires d'enregistrement-lecture.

6. Dispositif de mesure suivant la revendication 4 ou 5, caractérisé par le fait que
- le démultiplexeur série/parallèle réalise une division temporelle 1:8 de sorte qu'en permanence huit bits (b₀, ..., b₈; b₉... b₁₆; ..., bₙ₋₇ ... bₙ) de la séquence binaire (b₀...bₙ) sont toujours situés à l'intérieur de chaque tranche de temps (ZS₁, ..., ZSₙ). (Figure 3).

7. Dispositif de mesure suivant la revendication 6, caractérisé par le fait que
- la mémoire intermédiaire (Z) est constituée de huit registres à décalage (SR0, ... SR7) comportant chacun une longueur de mot de 16 bits. (Figures 2, 3).

8. Dispositif de mesure suivant la revendication 7, caractérisé par le fait que
- les huit registres a décalage (SR0...SR7) de la mémoire intermédiaire (Z) sont raccordés aux huit blocs de mémoire (RAM 0, ..., RAM 7) de la mémoire principale (H) par l'intermédiaire d'un bus de transmission de données (34) à 128 lignes parallèles, que les bits (b₀ ... b₇, b₈ ... b₁₆; ...; b₁₁₂ ... b₁₁₉, b₁₂₀ ... b₁₂₇), qui sont toujours mémorisés temporairement dans les registres à décalage (SR0, ..., SR7) dans deux tranches de temps successives (ZS₁; ZS₂, ...; ZS₁₅; ZS₁₆), sont mémorisés côte-à-côte respectivement dans un bloc de données (RAM 0; RAM 7). (Figures 2, 3, 4).

9. Dispositif de mesure suivant l'une des revendications 4 à 8, caractérisé par le fait que
- l'unité de comptage (ZE), qui est active dans le premier mode de mesure (MM1), comporte quatre chaînes de compteurs (ZK₁, ..., ZK₄) en tant que compteurs, qui
- sont constituées respectivement par un dispositif (4, ..., 7) de division préalable de la base de temps et par un compteur principal (8, ..., 11) de la base de temps, et
- sont chargées par l'intermédiaire du multiplexeur d'entrée (3). (Figure 2).
